# EUROPÄISCHE PATENTSCHRIFT

(11) **EP 2 839 175 B1**
(45) Veröffentlichungstag und Bekanntmachung des Hinweises auf die Patenterteilung: **25.05.2016**
(21) Anmeldenummer: 13704093.7
(22) Anmeldetag: 12.02.2013
(51) Int. Cl.: F16C 33/42, F16C 33/50, F16C 33/54, B21D 53/12, F16C 19/06, F16C 19/10, F16C 19/30

(54) **WÄLZKÖRPERFÜHRUNGSKÄFIG UND VERFAHREN ZUR HERSTELLUNG DESSELBEN**
ROLLING BEARING CAGE AND METHOD OF MANUFACTURING THE CAGE
CAGE DE ROULEMENT ET PROCÉDÉ DE FABRICATION DE LA CAGE

(30) Priorität: 19.04.2012 DE 102012206450
(43) Veröffentlichungstag der Anmeldung: 25.02.2015
(73) Patentinhaber: Schaeffler Technologies AG & Co. KG, 91074 Herzogenaurach (DE)
(72) Erfinder: REIMCHEN, Alexander, 91074 Herzogenaurach (DE)
(86) Internationale Anmeldenummer: PCT/EP2013/052722
(87) Internationale Veröffentlichungsnummer: WO 2013/156173

(56) Entgegenhaltungen:
- EP-A2- 1 837 539
- DE-A1- 1 575 428
- DE-A1- 4 425 345
- DE-A1- 10 011 651
- DE-C- 214 675
- FR-A- 530 949
- US-A- 1 137 010
- US-A- 3 820 867

## Beschreibung

### Gebiet der Erfindung

Die Erfindung bezieht sich auf einen Wälzkörperführungskäfig, gemäß dem Oberbegriff von Patentanspruch 1. Weiterhin bezieht sich die Erfindung auch auf ein Verfahren zur Herstellung eines derartigen Wälzkörperführungskäfigs.

### Hintergrund der Erfindung

Aus EP 1 837 539 A2 ist ein gattungsgemäßer Wälzkörperführungskäfig bekannt, welcher aus einem Blechmaterial gefertigt ist. Dieser Wälzkörperführungskäfig ist aus mehreren bogen förmigen Käfigsegmenten gebildet die als solche stumpf aneinandergesetzt und verschweißt sind.

Aus DE 44 25 345 ist ein zweiteiliger Wälzkörperführungskäfig aus Blech bekannt. Die Käfigteile sind mittels kopfförmiger Haltezapfen und entsprechender kopflöcher formschlüssig mit einander verbunden.

Aus FR 530 949 A ist ein als Kettenkäfig gestalteter Wälzkörperführungskäfig bekannt, dessen Käfigglieder flach aneinandergereiht und verschweißt sind. Die Ausbildung der Schweißstellen erfolgt nach einer plastischen Umformung des Ausgangsmateriales.

Aus DE 1 575 428 A ist ein Wälzkörperführungskäfig bekannt, dessen einzelne Käfigglieder wiederum flach und ohne Formschluss aneinandergereiht und dann verschweißt sind. Auch hier erfolgt die Ausbildung der Schweißstellen im Nachgang zu einer plastischen Umformung des Ausgangsmateriales.

Aus DE 1 625 540 A1 ist ein Kugellagerkäfig bekannt, der sich aus zwei axial profilierten Ringelementen zusammensetzt. Die beiden Ringelemente sind baugleich ausgeführt und axial derart profiliert, dass diese in Umfangsrichtung abfolgende Kalottentaschen bilden, die jeweils über Brückenabschnitte verbunden sind. Die beiden Ringelemente sind so zusammengesetzt, dass sich diese über ihre Brückenabschnitte kontaktieren wobei die hierbei jeweils übereinkommenden, einander zugewandten Kalottentaschen dann gemeinsam jeweils Kugelführungstaschen bilden in welche jeweils eine Kugel einsetzbar ist. Die beiden sich über die Brückenabschnitte kontaktierenden Ringelemente sind im Bereich der Brückenabschnitte durch Punktschweißstellen miteinander verschweißt. Zur Herstellung der Ringelemente werden diese aus einem Blechmaterial ausgestanzt und in einem Umformwerkzeug derart umgeformt, dass sie die zur Bildung der Kugelführungstaschen erforderliche Axialprofilierung erhalten.

Nachteilig bei diesem Kugellagerkäfig ist, dass beim Ausstanzen der Ringelemente aus dem Blechmaterial relativ viel Materialabfall entsteht.

### Aufgabe der Erfindung

Ausgehend von dem beschriebenen Stand der Technik liegt der Erfindung die Aufgabe zu Grunde, Lösungen anzugeben, durch welche es möglich wird, die bei der Herstellung von Wälzkörperführungskäfigen anfallenden Fertigungskosten zu reduzieren.

### Beschreibung der Erfindung

Erfindungsgemäß wird diese Aufgabe durch einen Wälzkörperführungskäfig mit den in Patentanspruch 1 angegebenen Merkmalen gelöst.

Dadurch wird es auf vorteilhafte Weise möglich, in einer unter prozesstechnischen Gesichtspunkten relativ kostengünstig zu bewerkstelligenden Weise, den Verschnittanfall bei der Herstellung von umformtechnisch gefertigten Wälzkörperführungskäfigen deutlich zu reduzieren. Die Erfindung erweist sich insbesondere bei der Herstellung von Wälzkörperführungskäfigen mit einem Innendurchmesser von mehr als 140 mm als besonders vorteilhaft, da bereits bei diesem Durchmesser die mit der Ausbildung von drei Schweißverbindungsstellen verbundenen Prozesskosten deutlich unter den Materialkosten des bislang anfallenden Verschnitts liegen.

Gemäß der Erfindung werden die in Umfangsrichtung abfolgend aneinander gesetzten Flachmaterial-Ring-segmente über eine Eingriffszone zusammengesetzt und in dieser Eingriffszone entlang darin einander zugewandter Kantenbereiche verschweißt. Die Flachmaterial-Ringsegmente werden dabei im Bereich der Eingriffszonen über formschlüssig ineinander greifende Fügekonturen miteinander verbunden. Diese Fügekonturen bilden dabei eine Hinterschnittgeometrie die als solche die Ringelemente miteinander in Umfangsrichtung vorläufig koppelt. Der geometrische Verlauf der Fügekonturen ist vorzugsweise so gewählt, dass sich eine hinreichende Koppelung der Ringsegmente bei möglichst kurzer Schweißnahtlänge ergibt. Die Fügekonturen sind weiterhin vorzugsweise so gestaltet, dass die Schweißnähte sowohl auf die Ringelementinnenumfangskante, als auch auf die Ringelementaußenumfangskante hin unter einem möglichst stumpfen Winkel zulaufen.

Die Flachmaterialringsegmente sind erfindungsgemäß aus einem Blechmaterial ausgeschnitten, insbesondere ausgestanzt. Eine relativ hohe Materialersparnis kann erfindungsgemäß realisiert werden, indem die Flachmaterialringsegmente als 120° Ringsegmente ausgebildet werden. Für die Zusammenfügung eines Ringelements aus derartigen Flachmaterialringsegmenten sind dann lediglich drei Schweißstellen erforderlich. Die 120°-Segmente lassen sich in enger sukzessiver Abfolge aus einem Blechstreifen ausstanzen. Bei diesem Ausstanzschritt können die kreisbogenartigen Innen- und Außenkanten, sowie die Fügegeometrien in einem Schritt ausgeschnitten werden.

Das erfindungsgemäße Konzept der Fertigung des Wälzkörperführungskäfigs aus einem geschweißten Ringelement eignet sich sowohl für die Herstellung von Radiallagerkäfigen, als auch für die Herstellung von Axiallagerkäfigen, insbesondere Käfigen von Rillen- und Schrägkugellagern. Insbesondere bei der Herstellung von Wälzkörperführungskäfigen für Rillen- und Schrägkugellager kann der Wälzkörperführungskäfig so aufgebaut sein, dass sich dieser aus einem ersten Ringelement und einem baugleichen spiegelsymmetrisch angesetzten zweiten Ringelement zusammensetzt. Die an sich baugleichen Ringelemente werden dabei vorzugsweise derart zusammengesetzt, dass die zwischen den Ringsegmenten der Ringelemente gebildeten Schweißstellen beider Ringelemente gegeneinander in Umfangsrichtung versetzt sind, d.h. eine Schweißstelle von einer ungeschweißten Stelle überlappt wird.

In verfahrenstechnischer Hinsicht wird die eingangs angegebenen Aufgabe erfindungsgemäß auch durch ein Verfahren gemäß Patentanspruch 7 gelöst.

Vorzugsweise erfolgt die Ausbildung der Schweißstelle durch Laserschweißung. Hierdurch wird eine Schweißstelle von hoher Festigkeit bei geringem Schweißverzug realisiert. Alternativ hierzu ist es auch möglich, die Schweißstelle als Pressschweißstelle auszubilden. Hierzu ist es möglich, im Bereich der Schweißstelle lokale Materialanhäufungen vorzuhalten, die beispielsweise durch Wulstabschnitte gebildet werden, die beim Ausstanzen der Ringelemente erzeugt werden können.

Die Ringsegmente können so gefertigt werden, dass diese zunächst ein geringes Übermaß aufweisen und nach dem Schweißen im Rahmen eines Coupierschrittes zunächst weiter zugeschnitten und ggf. kalibriert werden. Grundsätzlich jedoch können die Ringsegmente auch hinsichtlich ihrer Materialbreite auf Endmaß zugeschnitten und nachfolgend nur noch umgeformt und ggf. innerlich gestanzt werden.

Es ist möglich, das Ringsegment von einem hinreichend breiten Bandmaterial abzustanzen und dabei durch den Stanzstempel direkt in eine Positioniervorrichtung, beispielsweise eine Ringnut eines Drehtellers hineinzuschieben. Der Drehteller wird dann nach Einlegen des Ringsegments um ein entsprechendes Winkelmaß von z.B. 120° geschwenkt und das nächste Ringsegment wird vom Bandmaterial abgestanzt und wieder in die Ringnut des Drehtellers geschoben, wobei es mit der Verbindungsgeometrie des bereits in der Ringnut liegenden Ringsegmentes in Eingriff gelangt. Nach einem weiteren Drehen des Drehtellers wird das dritte Ringsegment vom Bandmaterial abgestanzt und in den freien Ringnutabschnitt eingelegt, wobei es nunmehr mit den beiden bereits in der Ringnut liegenden Ringsegmenten in Eingriff gelangt. Bereits vor dem Einbringen des dritten Ringsegments können die bereits in der Ringnut befindlichen Ringsegmente in dem Drehteller verschweißt werden. Nachdem das dritte Ringsegment eingefügt ist und damit in der Ringnut ein vollständiges Ringelement liegt, können die beiden restlichen Schweißstellen gebildet werden. Dann wird das fertig geschweißte Ringelement aus der Ringnut des Drehtellers ausgeworfen und der Vorgang erneut fortgesetzt. Die Stanz- und Schweißschritte können so durchgeführt werden, dass sich diese zeitlich überlagern. Während der Bildung der letzten beiden Schweißstellen am jeweiligen Ringelement kann Bandmaterial nachgefördert und ggf. auch schon gestanzt werden, wobei das hierbei gebildete Ringsegment entweder erst nach Entleerung des Drehtellers in die Ringnut verbracht wird oder ein weiterer Drehteller nachgefördert wird. Die Schweißung erfolgt vorzugsweise durch einen bahngesteuert aufgeleiteten Laserstrahl. Die Schweißung kann erforderlichenfalls unter Zugabe von Schweißmaterial, insbesondere über einen Schweißdraht erfolgen. Vorzugsweise jedoch wird die Schweißnaht durch lediglich lokales Aufschmelzen des Materials entlang der Fügekanten ausgebildet.

Es ist damit möglich, die Ringsegmente noch im Rahmen der dem Stanzvorgang zuzurechnenden Werkstückbewegung zu einem Ringelement zusammenzusetzen. Die Ringsegmente können im Rahmen dieses Fügeprozesses auch zunächst lediglich formschlüssig in dem Drehteller zusammengesetzt und dann aus dem Drehteller ausgehoben und als vorgefügte Ringelemente in eine Schweißstation verbracht werden.

Weiterhin ist es möglich, die zunächst ausgestanzten oder anderweitig ausgeschnittenen Ringsegmente unter Ausrichtung der Kanten zu einem Stapel, oder Ringsegmentblock zusammenzufügen und diesen dann einer Schweißstation zuzuführen, in welcher die Ringsegmente beispielsweise wieder in eine Ringnut eines Drehtellers eingelegt werden und dabei über ihre Kopf- und Schweifgeometrien miteinander in Eingriff gelangen.

Eine besonders hochwertige Ausführung der Schweißverbindungsstelle kann erreicht werden, indem vor dem Abstanzen des Ringsegments oder auch während des Abstanzens ein kantennaher Materialwulst erzeugt wird, der dann im Rahmen der Durchführung des Schweißvorganges ein Materialvolumen bereitstellt, das eine vollständige Ausfüllung der Schweißnahtstelle ermöglicht, so dass sich im Bereich der Schweißstelle keine Kehle bildet oder eine anderweitige Querschnittsschwächung entsteht.

### Kurze Beschreibung der Zeichnungen

Der erfindungsgemäß ausgebildete Wälzkörperführungskäfig wird nachfolgend in mehreren bevorzugten Ausführungsformen unter Bezugnahme auf die beigefügten Zeichnungen näher erläutert. Dabei zeigen:
- Figur 1: eine Skizze zur Veranschaulichung eines erfindungsgemäß zur Bildung eines Wälzkörperführungskäfigs eingesetzten Ringelementes, das sich aus mehreren miteinander verschweißten Ringsegmenten zusammensetzt;
- Figur 2: eine Skizze zur Veranschaulichung des Aufbaus eines zur Bildung des Ringelements nach Figur 1 eingesetzten Ringsegments;
- Figur 3: eine perspektivische Darstellung eines im Rahmen eines Umformschrittes aus einem Ringelement nach Figur 1 gefertigten Käfigteils eines zweiteiligen Kugellagerkäfigs;
- Figur 4: eine perspektivische Darstellung eines im Rahmen eines Umformschrittes aus einem Ringelement nach Figur 1 gefertigten Axialnadellagerkäfigs;
- Figur 5: eine perspektivische Darstellung eines im Rahmen eines Umformschrittes aus einem Ringelement nach Figur 1 gefertigten Käfigs für ein Axial-Kugelrollenlager;
- Figur 6: eine Skizze zur Veranschaulichung einer weiteren Variante der zwischen zwei Ringsegmenten verwirklichten, vorzugsweise überschweißten Fügekontur;
- Figur 7: eine Skizze zur Veranschaulichung eines Ausführungsbeispieles, bei welchem entlang der zu verschweißenden Kanten durch plastische Umformung eine Materialanhäufung gebildet wird;
- Figur 8a: eine erste Skizze zur Veranschaulichung eines Ausführungsbeispieles, bei welchem durch lokale plastische Umformung auch eine axiale Sicherung der in Umfangsrichtung ineinander formschlüssig verkrallten Ringsegmente erreicht werden kann;
- Figur 8b: eine zweite Skizze zur Veranschaulichung eines Ausführungsbeispieles, bei welchem durch lokale plastische Umformung auch eine axiale Sicherung der in Umfangsrichtung ineinander formschlüssig verkrallten Ringsegmente erreicht werden kann;
- Figur 9: eine Skizze zur Veranschaulichung der Schnittlage der erfindungsgemäß aus einem Bandmaterial ausgestanzten Ringsegmente zur Bildung eines zusammengefügten Ringelements für einen Wälzkörperführungskäfig.

### Ausführliche Beschreibung der Zeichnungen

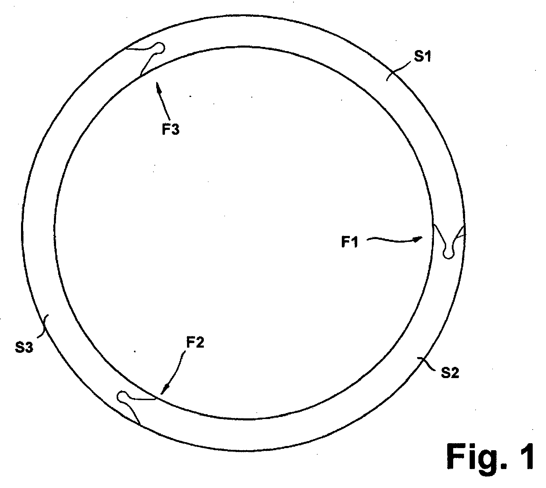

Figur 1 zeigt in Form einer Draufsicht ein Ringelement, das als solches im Rahmen nachfolgender Arbeitsschritte, insbesondere eines Umformschrittes zu einem Wälzkörperführungskäfig weiter verarbeitet wird, wobei das Ringelement dann im Rahmen des Umformschrittes eine Axialprofilierung und insgesamt eine Geometrie erhält, in welcher dieses mehrere in Umfangsrichtung abfolgende Wälzkörperführungsstrukturen bildet.
Das hier gezeigte Ringelement ist aus einem Blechmaterial gefertigt und setzt sich aus wenigstens drei in Umfangsrichtung abfolgend aneinander gefügten Flachmaterial-Ringsegmenten S1, S2, S3 zusammen. Diese Flachmaterial-Ringsegmente S1, S2, S3 sind über Fügestellen F1, F2, F3 zusammengefügt und hier zudem miteinander verschweißt.

Die hier erkennbar in Umfangsrichtung abfolgend aneinander gesetzten Flachmaterial-Ringsegmente S1, S2, S3 sind entlang der innerhalb der Fügestellen F1, F2, F3 einander zugewandter Kantenbereiche verschweißt. Die Flachmaterial-Ringsegmente S1, S2, S3 sind im Bereich der Fügestellen F1, F2, F3 derart gestaltet, dass diese Fügestellen F1, F2, F3 Eingriffszonen bilden, innerhalb welcher die Flachmaterialringsegmente S1, S2, S3 über formschlüssig ineinander greifende Fügekonturen miteinander verbunden sind. Diese Fügekonturen bilden dabei, wie hier erkennbar, eine Hinterschnittgeometrie, die als solche die Flachmaterial-Ringsegmente S1, S2, S3 miteinander in Umfangsrichtung zumindest vorläufig koppelt. Der geometrische Verlauf der Fügekonturen ist hier konkret so gewählt, dass sich eine hinreichende Koppelung der Flachmaterial-Ringsegmente S1, S2, S3 ergibt.

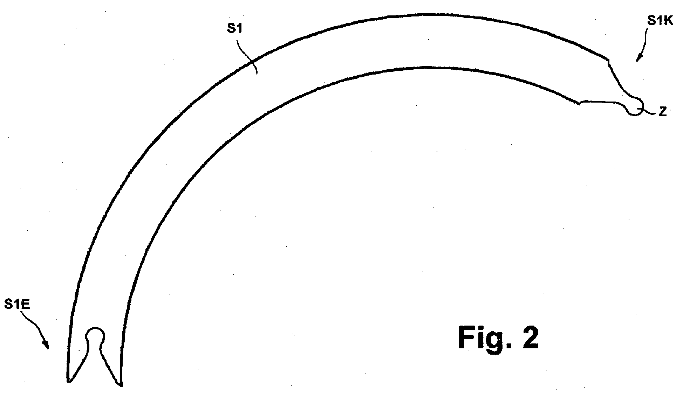

In Figur 2 ist der Aufbau und die Teilgeometrie eines einzelnen Flachmateriäl-Ringsegments S1 veranschaulicht. Das Flachmaterialringsegment S1 ist aus einem Blechmaterial derart ausgeschnitten, dass dieses Ringsegment ein 120°-Ringsegment bildet. Für die Zusammenfügung eines Ringelements aus derartigen Flachmaterialringsegmenten sind, wie in Figur 1 erkennbar, lediglich drei Schweißstellen erforderlich. Die 120°-Segmente lassen sich in enger flächiger Abfolge aus einem Blechstreifen ausstanzen. Bei diesem Ausstanzschritt werden die kreisbogenartigen Innen- und Außenkanten sowie die Fügegeometrien in einem Schritt ausgeschnitten. Das Flachmaterial-Ringsegment S1 bildet einen Kopfabschnitt S1K und einen Kopfeinsatzabschnitt S1E. Die Außenkontur des Kopfabschnitts S1K und die Innenkontur des Kopfeinsatzabschnitts sind so aufeinander abgestimmt, dass beim Einsetzen des Kopfabschnittes S1K eines sich anschließenden Flachmaterialringsegments in den Kopfeinsatzabschnitt S1E die beiden Flachmaterialringsegmente unter leichter elastischer Spannung ineinander sitzen. Soweit die zusammengefügten Flachmaterial-Ringsegmente verschweißt werden, ist es möglich, mit der Bildung der Schweißnaht an einer Stelle zu beginnen, die es erlaubt, dass während der Schweißnahtausbildung die miteinander zu verbindenden Ringsegmente sich aufgrund elastischer Vorspannung oder auch durch thermische Einflüsse einander nähern. Die Vorspannung kann auch so gewählt sein, dass diese ein thermisches Auseinanderweichen der zu verschweißenden Kantenbereiche verhindert. Bei dem hier gezeigten Ausführungsbeispiel ist es insbesondere möglich, mit der Ausbildung der Schweißnaht am Innenbereich der Fügekontur, d.h. an der Kante der Zungenspitze Z des Kopfabschnitts zu beginnen und die Schweißnaht in zwei Schritten vom Innenbereich zum Außen- bzw. Innenrand des Ringelements hin auszubilden.

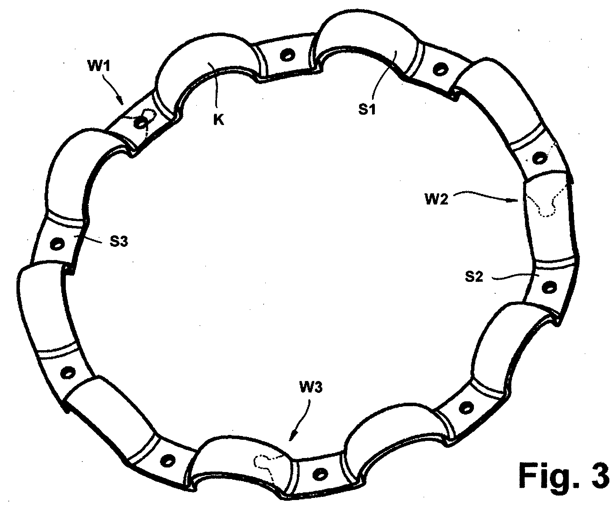

In Figur 3 ist ein Ringelement für einen Wälzkörperführungskäfig dargestellt, das umformtechnisch aus einem zusammengesetzten Ringelement nach Figur 1 gefertigt ist. In dem hier gezeigten Ringelement sind die Schweißstellen W1, W2, W3 angedeutet, entlang welcher die einzelnen Ringsegmente S1, S2, S3 in einem der plastischen Umformung vorangegangenen Umformschritt miteinander verschweißt sind. Dieses Ringelement wird mit einem weiteren baugleichen Ringelement zu einem Käfig für ein Rillenkugellager zusammengesetzt. Das hier gezeigte Ringelement bildet mehrere in Umfangsrichtung abfolgende Kalottentaschen K, die im Zusammenspiel mit einem spiegelsymmetrisch angesetzten baugleichen Ringelement dann Kugelführungstaschen bilden. Die Verbindung der beiden zusammengesetzten Ringelemente kann je nach Bauart des Kugellagers vor- oder auch erst nach dem Einsetzen der Kugeln in den zwischen Lagerinnenring und Lageraußenring gebildeten Bahnraum erfolgen. Bei einem Rillenkugellager erfolgt die Verbindung der beiden Ringelemente typischerweise erst nach dem Einsetzen der Kugeln in den Bahnraum.

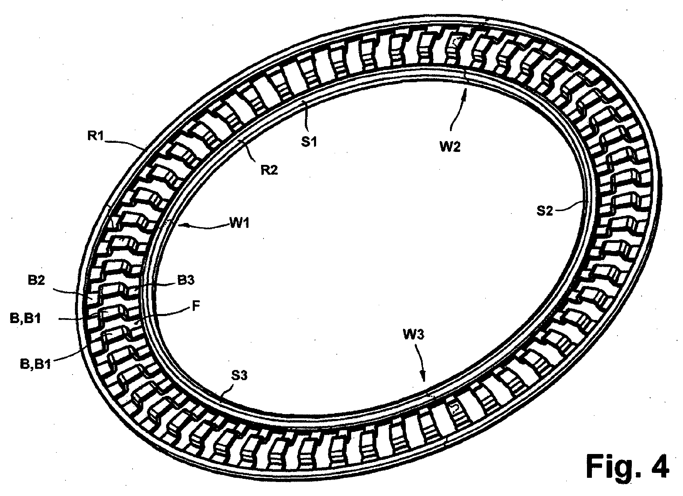

In Figur 4 ist eine weitere Ausführungsform eines erfindungsgemäßen Ringelements für einen Wälzkörperführungskäfig dargestellt, das ähnlich wie die Variante nach Figur 3 umformtechnisch aus einem zusammengesetzten Ringelement nach Figur 1 gefertigt ist. In dem hier gezeigten Ringelement sind wiederum die Schweißstellen W1, W2, W3 angedeutet, entlang welcher die einzelnen Ringsegmente S1, S2, S3 in einem der plastischen Umformung vorangegangenen Umformschritt miteinander verschweißt sind. Der hier gezeigte Wälzkörperführungskäfig ist als Axial-Zylinderrollenführungskäfig ausgebildet. Dieser Wälzkörperführungskäfig bildet mehrere in Umfangsrichtung abfolgende Wälzkörperführungsfenster F, die durch Führungsstege B voneinander getrennt sind. Die Führungsstege B sind axial profiliert und bilden eine Mittelstufe B1 und Anschlussbrücken B2, B3. Der Außenrandbereich R1 des Wälzkörperführungskäfigs bildet im Axialschnitt ein Winkelprofil. Auch der Innenrandbereich R2 des Wälzkörperführungskäfigs bildet im Axialschnitt ein Winkelprofil. Es ist möglich, im Innen- und/oder Außenrandbereich R1, R2 des Ringelementes ein zusätzliches Drahtringelement umformtechnisch einzufassen, welches die mechanische Festigkeit des Ringelementes, insbesondere auch im Bereich der Schweißstellen W1, W2, W3, erhöht.

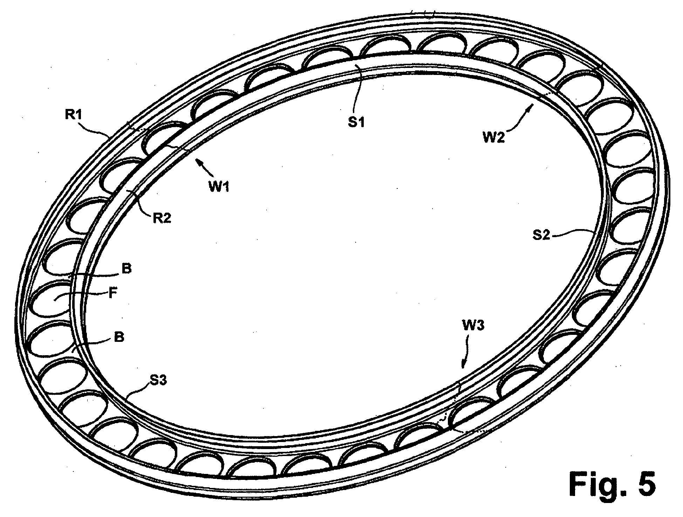

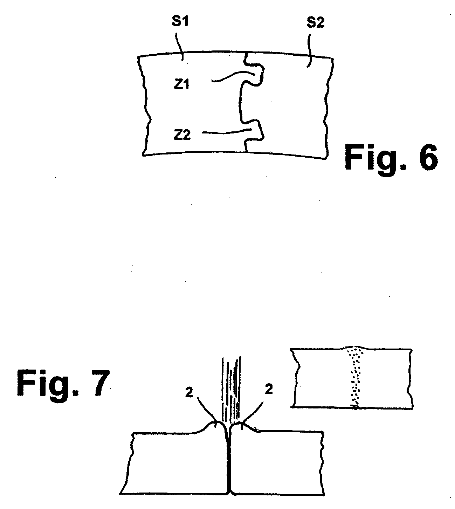

In Figur 5 ist eine dritte Ausführungsform eines erfindungsgemäßen Ringelements für einen Wälzkörperführungskäfig dargestellt, das ähnlich wie die Varianten nach den Figuren 3 und 4 ebenfalls umformtechnisch aus einem zusammengesetzten Ringelement nach Figur 1 gefertigt ist. In dem hier gezeigten Ringelement sind wiederum die Schweißstellen W1, W2, W3 angedeutet, entlang welcher die einzelnen Ringsegmente S1, S2, S3 in einem der plastischen Umformung vorangegangenen Umformschritt miteinander verschweißt sind. Der hier gezeigte Wälzkörperführungskäfig ist als Kugelführungskäfig für ein Axialkugellager ausgebildet. Dieser Kugelführungskäfig bildet mehrere in Umfangsrichtung abfolgenden Wälzkörperführungsfenster F, die wiederum durch Führungsstege B voneinander getrennt sind. Die Wälzkörperführungsfenster F sind in das umformtechnisch gebildete Ringelement in einem der Umformung nachfolgenden Bearbeitungsschritt eingestanzt. Der Außenrandbereich R1 des Kugelführungskäfigs bildet ähnlich wie bei der Variante nach Figur 4 im Axialschnitt ein Winkelprofil. Auch der Innenrandbereich R2 des Wälzkörperführungskäfigs bildet im Axialschnitt ein Winkelprofil. Es ist auch hier möglich, im Innen- und/oder Außenrandbereich R1, R2 des Ringelementes ein zusätzliches Drahtringelement umformtechnisch einzufassen, welches die mechanische Festigkeit des Käfigs erhöht und die Schweißstellen W1. W2, W3 überbrückt. In Figur 6 ist in Form einer Draufsicht auf einen Abschnitt eines Ringelementes eine alternative Fügekontur veranschaulicht, durch welche zwei abfolgende Ringsegmente S1, S2 miteinander verbunden werden können. Diese Kontur zeichnet sich durch eine geringe Spaltaufweitung während des Schweißvorganges aus und beansprucht in Umfangsrichtung wenig Material. Die Fügekontur bildet zwei Eingriffszungen Z1, Z2, die formschlüssig in einer entsprechenden Komplementärkontur verankert sind. Der Auslauf der Fügekanten auf den Innen- bzw. Außenrand ist relativ stumpf, er beträgt hier nahezu 90°.

In Figur 7 ist in Form einer Querschnittsskizze veranschaulicht, wie durch Bildung von Wülsten 2, 3 an dem Blechmaterial eine gewisse Materialanhäufung vorgehalten werden kann, die es ermöglicht, nach Aufschmelzen derselben, insbesondere durch Laserschweißen, eine im Wesentlichen flache Schweißstelle zu generieren. Die Wülste 2, 3 können im Rahmen des Stanzvorganges oder eines vorangehenden Prägeschrittes durch plastische Materialumformung gebildet werden.

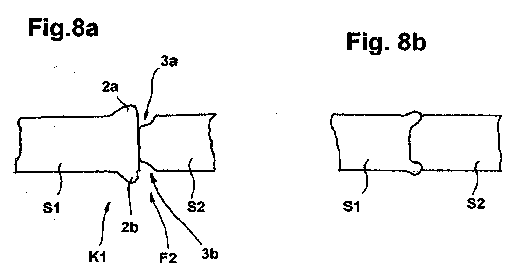

In den Figuren 8a und 8b ist ebenfalls in Form einer Querschnittsskizze veranschaulicht, wie durch lokale Materialumformung eine Axialsicherung der Ringsegmente S1, S2 erreicht werden kann. So können beispielsweise entlang der Kopfkante K1 des Ringsegments S1 durch einen vorangehenden Prägeschritt Wülste 2a, 2b und an der Fußkante F2 des sich anschließenden Ringsegments S2 jeweils Einsenkungen 3a, 3b ausgebildet werden. Nach dem Zusammenfügen der Ringsegmente S1, S2 werden die Wulste 2a, 2b überwalzt und in den in Figur 8b gezeigten Zustand verformt. In diesem Zustand sind die beiden Ringsegmente S1, S2 gegeneinander axial gesichert. Erforderlichenfalls kann die so gebildete Verbindungsstelle überschweißt werden.

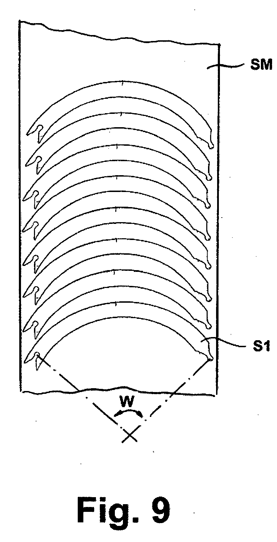

In Figur 9 ist beispielhaft dargestellt, wie ein Ringsegment S1 aus einem Bandmaterial SM in enger Schnittfolge ausgestanzt werden kann. Die ausgestanzten Ringsegmente können unmittelbar im Anschluss an den Stanzschritt zu einem Ringelement zusammengefügt und dann verscheißt werden. Bei dem hier gezeigten Ausführungsbeispiel bildet das Ringsegment S1 einem Segmentwinkel W von 120°. Soweit das Ringelement aus drei unmittelbar in Abfolge aus dem Bandmaterial SM ausgestanzten Segmenten S1 gebildet wird, ist sichergestellt, dass innerhalb eines Ringelements im Wesentlichen gleiche Materialeigenschaften gegeben sind. Dies ist für eine gleichmäßige Ausbildung der Schweißstellen von besonderem Vorteil.

### Bezugszahlenliste

- 2a: Wulst
- 2b: Wulst
- 3a: Einsenkung
- 3b: Einsenkung
- B: Führungssteg
- B2: Anschlussbrücke
- B3: Anschlussbrücke
- F1: Fügestelle
- F2: Fügestelle
- F3: Fügestelle
- K: Kalottentaschen
- K1: Kopfkante
- R1: Außenrandbereich
- R2: Innenrandbereich
- S1: Flachmaterial-Ringsegment
- S2: Flachmaterial-Ringsegment
- S3: Flachmaterial-Ringsegment
- S1K: Kopfabschnitt
- S1E: Kopfeinsatzabschnitt
- W: Segmentwinkel
- W1: Schweißstellen
- W2: Schweißstellen
- W3: Schweißstellen
- SM: Bandmaterial

## Patentansprüche

1. Wälzkörperführungskäfig mit einem Ringelement, das aus einem Blechmaterial gefertigt ist und eine umformtechnisch gebildete Axialprofilierung aufweist und mehrere in Umfangsrichtung abfolgende Wälzkörperführungsstrukturen bildet, wobei sich das Ringelement aus wenigstens zwei in Umfangsrichtung abfolgend aneinander gefügten Flachmaterial-Ringsegmenten (S1, S2, S3) zusammensetzt, wobei die Flachmaterial-Ringsegmente (S1, S2, S3) über Schweißstellen (W1, W2, W3) miteinander verschweißt sind, **dadurch gekennzeichnet, dass** die Flachmaterial-Ringsegmente (S1, S2, S3) in einem der Ausbildung der Axialprofilierung vorangegangenen Fertigungsschritt zusammengefügt sind, wobei die Flachmaterial-Ringsegmente (S1, S2, S3) über formschlüssig ineinander greifende Fügekonturen (F1, F2, F3) miteinander verbunden sind.

2. Wälzkörperführungskäfig nach Anspruch 1, **dadurch gekennzeichnet, dass** die in Umfangsrichtung abfolgend aneinander gesetzten Flachmaterial-Ringsegmente (S1, S2, S3) über eine Eingriffszone zusammengesetzt und in dieser Eingriffszone entlang darin einander zugewandten Kantenbereiche verschweißt sind.

3. Wälzkörperführungskäfig nach wenigstens einem der Ansprüche 1 oder 2, **dadurch gekennzeichnet, dass** die Flachmaterial-Ringsegmente (S1, S2, S3) aus einem Blechmaterial ausgeschnitten sind.

4. Wälzkörperführungskäfig nach wenigstens einem der Ansprüche 1 bis 3, **dadurch gekennzeichnet, dass** die Flachmaterial-Ringsegmente (S1, S2, S3) als 120° Ringsegmente ausgebildet sind

5. Wälzkörperführungskäfig nach wenigstens einem der Ansprüche 1 bis 4, **dadurch gekennzeichnet, dass** der Wälzkörperführungskäfig als Radiallagerkäfig ausgeführt ist und sich aus einem ersten Ringelement und einem baugleichen spiegelsymmetrisch angesetzten zweiten Ringelement zusammensetzt.

6. Wälzkörperführungskäfig nach Anspruch 5, **dadurch gekennzeichnet, dass** die Ringelemente derart zusammengesetzt sind, dass die zwischen den Ringsegmenten der Ringelemente gebildeten Schweißstellen (W1, W2, W3) gegeneinander in Umfangsrichtung versetzt sind.

7. Verfahren zur Herstellung eines Wälzkörperführungskäfigs aus einem Ringelement, das aus einem Blechmaterial gefertigt ist und im Rahmen eines Umformschrittes eine Axialprofilierung erhält, wobei der Wälzkörperführungskäfig mehrere in Umfangsrichtung abfolgende Wälzkörperführungsstrukturen bildet und wobei im Rahmen eines dem Umformschritt vorangehenden Verfahrensschrittes das Ringelement aus wenigstens zwei in Umfangsrichtung abfolgend über formschlüssig ineinander greifende Fügekonturen aneinander gefügten Flachmaterial-Ringsegmenten zusammensetzt wird, die im Bereich einer durch diese Flachmaterial-Ringsegmente gebildeten Fügestelle miteinander verschweißt werden.

8. Verfahren nach Anspruch 7, **dadurch gekennzeichnet, dass** die Ausbildung der Schweißstelle durch Laserschweißung erfolgt.

## Claims

1. Rolling body guide cage with a ring element which is produced from a sheet metal material and has an axial profiling formed by forming techniques and several rolling body guide structures which are arranged in succession in the circumferential direction, wherein the ring element is composed of at least two flat material ring segments (S1, S2, S3) which are joined to one another in succession in the circumferential direction, wherein the flat material ring segments (S1, S2, S3) are welded to one another via weld points (W1, W2, W3), **characterized in that** the flat material ring segments (S1, S2, S3) are joined together in a production step which precedes the formation of the axial profiling, wherein the flat material ring segments (S1, S2, S3) are connected to one another across positively engaging joint contours (F1, F2, F3).

2. Rolling body guide cage according to Claim 1, **characterized in that** the flat material ring segments (S1, S2, S3) placed in succession with one another in the circumferential direction are put together across an engagement zone and in this engagement zone are welded along edge regions which face one other therein.

3. Rolling body guide cage according to at least one of Claims 1 and 2, **characterized in that** the flat material ring segments (S1, S2, S3) are cut out from a sheet metal material.

4. Rolling body guide cage according to at least one of Claims 1 to 3, **characterized in that** the flat material ring segments (S1, S2, S3) are formed as 120° ring segments.

5. Rolling body guide cage according to at least one of Claims 1 to 4, **characterized in that** the rolling body guide cage is embodied as a radial bearing cage and is composed of a first ring element and a structurally identical second ring element positioned in mirror-symmetry.

6. Rolling body guide cage according to Claim 5, **characterized in that** the ring elements are put together in such a manner that the weld points (W1, W2, W3) formed between the ring segments of the ring elements are offset with respect to one another in the circumferential direction.

7. Method for manufacturing a rolling body guide cage from a ring element which is produced from a sheet metal material and obtains an axial profiling in the context of a forming step, wherein the rolling body guide cage forms several rolling body guide structures arranged in succession in the circumferential direction and wherein, in the context of a method step which precedes the forming step, the ring element is composed of at least two flat material ring segments which are joined to one another across positively engaging joint contours in succession in the circumferential direction and are welded to one another in the region of a joint formed by these flat material ring segments.

8. Method according to Claim 7, **characterized in that** the formation of the weld point is carried out by laser welding.

## Revendications

1. Cage de guidage de corps de roulement comprenant un élément de bague qui est fabriqué en un matériau en tôle et qui présente un profilage axial formé par une technique de façonnage et forme plusieurs structures de guidage de corps de roulement successives dans la direction périphérique, l'élément de bague se composant d'au moins deux segments de bague en matériau plat (S1, S2, S3) assemblés les uns contre les autres et successifs dans la direction périphérique, les segments de bague en matériau plat (S1, S2, S3) étant soudés les uns aux autres par le biais de zones de soudure (W1, W2, W3), **caractérisée en ce que** les segments de bague en matériau plat (S1, S2, S3) sont assemblés dans une étape de fabrication précédant la réalisation du profilage axial, les segments de bague en matériau plat (S1, S2, S3) étant connectés les uns aux autres par le biais de contours d'assemblage (F1, F2, F3) s'engageant les uns dans les autres par correspondance de formes.

2. Cage de guidage de corps de roulement selon la revendication 1, **caractérisée en ce que** les segments de bague en matériau plat (S1, S2, S3) placés les uns contre les autres successifs dans la direction périphérique sont assemblés par le biais d'une zone d'engagement et sont soudés dans cette zone d'engagement le long de régions de bord tournées dans celle-ci les unes vers les autres.

3. Cage de guidage de corps de roulement selon au moins l'une quelconque des revendications 1 ou 2, **caractérisée en ce que** les segments de bague en matériau plat (S1, S2, S3) sont découpés dans un matériau en tôle.

4. Cage de guidage de corps de roulement selon au moins l'une quelconque des revendications 1 à 3, **caractérisée en ce que** les segments de bague en matériau plat (S1, S2, S3) sont réalisés sous forme de segments de bague de 120°.

5. Cage de guidage de corps de roulement selon au moins l'une quelconque des revendications 1 à 4, **caractérisée en ce que** la cage de guidage de corps de roulement est réalisée sous forme de cage de palier radial et se compose d'un premier élément de bague et d'un deuxième élément de bague de même construction et monté avec une symétrie spéculaire.

6. Cage de guidage de corps de roulement selon la revendication 5, **caractérisée en ce que** les éléments de bague sont assemblés de telle sorte que les zones de soudure (W1, W2, W3) formées entre les segments de bague des éléments de bague soient décalées les unes par rapport aux autres dans la direction périphérique.

7. Procédé de fabrication d'une cage de guidage de corps de roulement constituée d'un élément de bague qui est fabriqué à partir d'un matériau en tôle et qui obtient, dans le cadre d'une étape de façonnage, un profilage axial, la cage de guidage de corps de roulement formant plusieurs structures de guidage de corps de roulement successives dans la direction périphérique et l'élément de bague, dans le cadre d'une étape de procédé précédant l'étape de façonnage, étant constitué d'au moins deux segments de bague en matériau plat successifs dans la direction périphérique, assemblés les uns aux autres par le biais de contours d'assemblage s'engageant les uns dans les autres par correspondance de formes, soudés les uns aux autres dans la région d'une zone d'assemblage formée par ces segments de bague en matériau plat.

8. Procédé selon la revendication 7, **caractérisé en ce que** la réalisation des zones de soudure s'effectue par soudage au laser.
